(19) **Europäisches Patentamt**
**European Patent Office**
**Office européen des brevets**

(11) **EP 3 034 477 B1**

(12) **EUROPÄISCHE PATENTSCHRIFT**

(45) Veröffentlichungstag und Bekanntmachung des Hinweises auf die Patenterteilung:
**06.02.2019 Patentblatt 2019/06**

(21) Anmeldenummer: **14199489.7**

(22) Anmeldetag: **19.12.2014**

(51) Int Cl.:
**C03B 23/053** (2006.01) **C03B 23/07** (2006.01)

(54) **VERFAHREN ZUR HERSTELLUNG EINES ROHRES AUS GLAS**

METHOD FOR PRODUCING A GLASS TUBE

PROCÉDÉ POUR LA FABRICATION D'UN TUBE EN VERRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.06.2016 Patentblatt 2016/25**

(73) Patentinhaber: **Heraeus Quarzglas GmbH & Co. KG**
**63450 Hanau (DE)**

(72) Erfinder:
• **Gromann, Boris**
**63743 Aschaffenburg (DE)**
• **Whippey, Nigel**
**63500 Seligenstadt (DE)**

(74) Vertreter: **Staudt, Armin Walter**
**Sandeldamm 24a**
**63450 Hanau (DE)**

(56) Entgegenhaltungen:
CN-A- 102 887 626     JP-A- H10 101 353
JP-A- 2004 149 325

EP 3 034 477 B1

**Beschreibung**

Technisches Gebiet

Die vorliegende Erfindung betrifft ein Verfahren zur Herstellung eines Rohres aus Glas, insbesondere aus Quarzglas, durch Umformen eines Hohlzylinders aus dem Glas mit einem Außendurchmesser $D_1$, indem dieser um eine Rotationsachse rotierend bereichsweise in einer mit einer relativen Vorschubgeschwindigkeit Va bewegten Heizzone erweicht, und der erweichte Bereich unter der Wirkung einer Zentrifugalkraft und/oder eines in der Hohlzylinderbohrung anliegenden Innenüberdrucks unter Bildung einer Verformungszone radial gedehnt und kontinuierlich das Rohr mit einem Außendurchmesser $D_2$, der größer ist als $D_1$, geformt wird.

Stand der Technik

Mittels derartiger Verfahren und Vorrichtungen werden Hohlzylinder aus Glas; insbesondere aus Quarzglas, in einem oder in mehreren Heiß-Umformschritten zu Rohren umgeformt, wobei die radialen Rohr-Abmessungen gegenüber den radialen Abmessungen des Hohlzylinders oder das Querschnittsprofil verändert werden. Dabei wird ein um seine Längsachse rotierender Ausgangs-Hohlzylinder zonenweise erweicht und dabei unter Einwirkung einer nach radial nach außen gerichteten Kraft entweder gegen ein Formwerkzeug gedehnt, das in vorgegebenem radialem Abstand zur Rohrlängsachse angeordnet ist, oder er wird werkzeugfrei umgeformt. Die radial nach außen gerichtete Kraft basiert auf der Zentrifugalkraft und/oder auf einem Innen-Überdruck in der Hohlzylinder-Innenbohrung (auch als "Blasdruck" bezeichnet).

Ein besonderes Augenmerk liegt dabei auf der Maßhaltigkeit des abgezogenen Rohrstrangs. Um diese zu gewährleisten, ist eine laufende Erfassung und kontinuierliche Regelung einer radialen Abmessung des Rohrstrangs, wie dem Außendurchmesser, dem Innendurchmessers oder der Wanddicke unumgänglich. Als Stellgröße einer solchen Regelung sind der Blasdruck, die relative Vorschubgeschwindigkeit zwischen Hohlzylinders und Heizzone und die Temperatur in der Heizzone gebräuchlich.

Im ursprünglichen Hohlzylinder bereits vorhandene Maßabweichungen setzen sich beim Umformprozess leicht in das abgezogene Glasrohr fort und werden dabei sogar verstärkt. Besonders nachteilig bemerkbar machen sich dabei Schwankungen im radialen Querschnittsprofil oder Wandeinseitigkeiten, also radial ungleichmäßige Verläufe der Rohrwanddicke, was in Fachkreisen auch als "Siding" bezeichnet wird. Da bei Einsatz eines Formwerkzeugs der Außendurchmesser relativ fest vorgegeben ist, gehen in dem Fall Rohr-Wandeinseitigkeiten mit Schwankungen im Rohr-Innendurchmesser einher.

Mit zunehmendem Rohr-Enddurchmesser nimmt diese Problematik zu. Denn beim Umformprozess entwickeln sich im Ausgangszylinder vorhandene Wanddickenschwankungen exponentiell mit dem Durchmesser. Daher können letztlich die laut Spezifikation noch tolerierbaren Maximalwerte für das Siding (beispielsweise 1mm) den praktisch realisierbaren Rohr-Enddurchmesser begrenzen. Dieser Effekt hängt auch von der Höhe des Blasdrucks ab, so dass dieser nicht beliebig hoch sein kann. Um kommerziell akzeptable Umformraten zu erreichen, muss stattdessen das Glas höher erhitzt und stärker erweicht werden. Dies führt wiederum zu verstärkten Ziehstreifen oder anderen Defekten in der Glaswandung sowie zu einem erhöhten Energiebedarf, insbesondere bei großvolumigen Rohren (im Folgenden auch als "Großrohre" bezeichnet), die wegen ihres großen Umfangs besonders rasch abkühlen.

Je größer der Rohr-Enddurchmesser ist, umso schwieriger und kostenaufwändiger wird daher die Herstellung eines maßhaltigen Großrohres. Zur Entschärfung dieser Problematik wird in der JP 2004-149325 A vorgeschlagen, den Umformprozess in mehrere Umformstufen mit sukzessiver Durchmesservergrößerung zu unterteilen. Dazu wird der umzuformende Quarzglas-Hohlzylinder mit einem Durchmesser von 250 mm in eine Drehbank eingespannt und um seine horizontal orientierte Längsachse rotiert, während er mittels einer ringförmigen Anordnung von Heizbrennern erhitzt und dabei zonenweise erweicht wird, indem die Heizbrenner mit einer vorgegebenen Vorschubgeschwindigkeit Va entlang des Zylindermantels bewegt werden. Die Durchmesser-Vergrößerung ergibt sich infolge der auf den erweichten Bereich einwirkenden Zentrifugalkraft. Die Verformungszone wandert einmal entlang des ganzen Ausgangszylinders, bis dieser vollständig gedehnt ist. Der Rohr-Außendurchmesser wird dabei kontinuierlich mittels eines Laserstrahls werkzeugfrei erfasst. Dieser Umformschritt wird wiederholt, bis der nominale Rohrdurchmesser von 440 mm erreicht ist. Bei jedem Umformschritt wird der Rohr-Durchmesser um 15 mm vergrößert.

Die CN 102887626 A beschreibt einen mehrstufigen Umformprozess zur Herstellung eines Quarzglasrohres mit einem Außendurchmesser von mehr als 520 mm mit Umformstufen von jeweils 60 mm.

Technische Aufgabe

Bei diesem Umformprozess ergibt sich bei jeder einzelnen Umformstufe ein vergleichsweise geringer Umformgrad, was mit einer geringeren Abweichung vom Sollwert einer radialen Rohr-Abmessung einhergeht. Außerdem bietet jede Umformstufe die Möglichkeit, im jeweiligen Ausgangszylinder vorhandene Maßabweichungen zu berücksichtigen und zu korrigieren.

Andererseits liegt es auf der Hand, dass diese Verfahrensweise einen hohen Zeit- und Energieaufwand erfordert, zumal das Rohr zwischen aufeinanderfolgenden Umformschritten abkühlt.

Es kann versucht werden, die Anzahl der Umformschritte möglichst gering zu halten, indem der jeweilige Verformungsgrad - also die Durchmesseränderung - so groß wie möglich eingestellt wird. Es zeigt sich jedoch, dass der Umformprozess bei sehr großen Durchmesseränderungen instabil wird, was sich zunächst in Durchmesserschwankungen manifestiert, die eine in Längsachsenrichtung verlaufende Wellenstruktur bilden.

Es ist somit Aufgabe der Erfindung, ein Verfahren anzugeben, das es erlaubt, einen Hohlzylinder in einem einzigen oder in möglichst wenigen Umformschritten zu einem Glasrohr mit großem Außendurchmesser und hoher Maßhaltigkeit umzuformen.

### Allgemeine Beschreibung der Erfindung

Hinsichtlich des Verfahrens wird diese Aufgabe ausgehend von dem eingangs genannten Verfahren erfindungsgemäß dadurch gelöst, dass das radiale Dehnen des erweichten Bereichs mit einer ortsabhängigen, radialen Dehngeschwindigkeit $V_r$ erfolgt, deren Profil entlang der Verformungszone einen Maximalwert $V_{r,max}$ aufweist, der kleiner als das 2-fache der Vorschubgeschwindigkeit $V_a$ ist, und wobei die Temperatur am Ende der Verformungszone geringer ist als am Anfang der Verformungszone, indem die Heizzone einen dem Anfang der Verformungszone zugeordneten vorderen Heizbereich und einen dem Ende der Verformungszone zugeordneten hinteren Heizbereich aufweist, wobei mittels des vorderen Heizbereichs eine höhere Temperatur auf der Oberfläche der Verformungszone erzeugt wird als mittels des hinteren Heizbereichs, wobei die Verformungszone (30) einen ortsabhängigen Außendurchmesser $D_V$ aufweist, und wobei für den Außendurchmesser $D_{V1}$ am Anfang der Verformungszone (30) gilt: $D_{V1}=D_1+1/10x(D_2-D_1)$, und für den Außendurchmesser $D_{V2}$ am Ende der Verformungszone (30): $D_{V2}=D_2-1/10 \ x(D_2-D_1)$.

Im Verformungsbereich (hier auch als "Verformungszone" bezeichnet) nimmt der Durchmesser des erweichten Glasstrangs in Abhängigkeit vom Verformungswiderstand des Glases, der insbesondere von der Wanddicke und der Viskosität bestimmt wird, vom Hohlzylinder zum Rohr hin kontinuierlich zu. Im Längsschnitt zeigt der Verformungsbereich insgesamt Trichterform mit einem in der Schnittdarstellung S-förmigen Übergang zwischen Zylinder und Rohr, der im Folgenden auch als "Schulter" bezeichnet wird.

Es hat sich gezeigt, dass die weiter oben erwähnte Prozessinstabilität einsetzt und die Wellenstruktur dann entsteht, wenn die Verformungsgeschwindigkeit des Glases in radialer Richtung (hier auch als "radiale Dehngeschwindigkeit" bezeichnet) im Vergleich zum Anfangswert zu Beginn der radialen Verformung zu groß wird. Die radiale Dehngeschwindigkeit ist proportional zum Verhältnis von Rohr-Außendurchmesser und -Wanddicke. Das heißt, sie ist umso größer, je größer der Außendurchmesser des Rohres und umso kleiner seine Wanddicke sind. Der Außendurchmesser nimmt vom Anfang zum Ende des Verformungsbereichs zu, und die Wanddicke nimmt in der Regel ab; sie kann aber auch in etwa gleich bleiben. Deshalb steigt - ohne Gegenmaßnahme - die radiale Dehngeschwindigkeit vom Anfang des Verformungsbereichs zum Ende hin an. Bei konstanter Relativgeschwindigkeit zwischen Heizzone und Hohlzylinder führt dies dazu, dass die Steigung im Bereich der "Schulter" immer steiler wird. Dadurch reduziert sich jedoch der konvektive Wärmeeintrag in das Glas aus radialer Richtung, was eine relative, lokale Abkühlung und damit eine Verringerung der lokalen radialen Dehngeschwindigkeit bewirkt. Dadurch wird die "Schulter" wieder flacher und der radiale Wärmestrahlungseintrag in das Glas und die lokale Temperatur wieder höher, so dass sich die lokale radiale Dehngeschwindigkeit wieder vergrößert und der Mechanismus von neuem beginnt. Das System schwingt und verursacht so die umlaufenden Wellen.

Der grundlegende Gedanke zur Vermeidung dieser Prozessinstabilität ist es nun, dem Auftreten einer zu hohen radialen Dehngeschwindigkeit im Verformungsbereich entgegenzuwirken.

Die radiale Dehngeschwindigkeit $V_r$ kann hoch sein, wenn sich die Verformungszone mit hoher Geschwindigkeit bewegt, wenn auch die axiale Vorschubgeschwindigkeit $V_a$ hoch ist. Die Vorschubgeschwindigkeit wird in der Regel während des gesamten Umformprozesses konstant gehalten. Ein Maß für die Höhe der radialen Dehngeschwindigkeit bei gegebener Vorschubgeschwindigkeit ist daher die Steigung der "Schulter" im Verformungsbereich. Die Schulter ist umso steiler, je größer das Verhältnis zwischen radialer Dehngeschwindigkeit und axialer Vorschubgeschwindigkeit ist. Mit anderen Worten, die Steigung der Schulter ergibt sich aus dem Verhältnis der Geschwindigkeiten $V_r/V_a$, wobei sich $V_r$ auf die Dehnung des Radius bezieht, also des halben Durchmessers.

Es hat sich gezeigt, dass Prozessschwankungen vermieden werden, wenn dieses Verhältnis kleiner ist als 2, noch besser kleiner als 1,5, vorzugsweise kleiner als 1 und besonders bevorzugt kleiner als 0,7. Die maximale radiale Dehngeschwindigkeit $V_{r,max}$ ist dabei vorzugsweise kleiner als 20 cm/min, besonders bevorzugt kleiner als 10 cm/min.

Die Umformung des Hohlzylinders beruht auf dem Blasdruck oder auf der Zentrifugalkraft beim Rotieren (Schleudern) oder auf beiden Wirkungen. Die in der Rohrwandung wirkende Tangentialspannung $\sigma T$ setzt sich aus folgenden zwei Anteilen zusammen, von denen der erste die Wirkung des Blasdrucks und der zweite die Wirkung der Zentrifugalkraft

beschreibt.

$$\sigma T = p \cdot r/WD + \rho \omega^2 r^2 \qquad (1)$$

wobei gilt: p=Druck, r=Radius im Umformbereich, WD=Wanddicke, p=spezifische Dichte des Glases, $\omega$=Winkelgeschwindigkeit Die in der Rohrwandung wirkende Tangentialspannung (ohne Schleudern; nur Blasdruck) bewirkt die radiale Dehnung in der Verformungszone nach:

$$\sigma_T = \eta_D \frac{d\varepsilon}{dt} \; (\eta_D: \text{Dehnviskosität}, \; \varepsilon \approx \frac{r-r_0}{r_0}) \qquad (2)$$

Somit gilt für die Dehngeschwindigkeit des Glases in radialer Richtung (und bezogen auf den Radius):

$$\frac{d\varepsilon}{dt} = \frac{\sigma_T}{\eta_D} \qquad (3)$$

Somit ist die Viskosität des Glases ein zur Beeinflussung der lokalen Verformungsgeschwindigkeit geeigneter Parameter. Denn die Verformungsgeschwindigkeit ist umgekehrt proportional zur Viskosität, und diese hängt von der Temperatur des Glases ab. Demnach wird als eine geeignete Maßnahme zur Lösung des Problems und zur Beeinflussung des Maximalwerts der radialen Dehngeschwindigkeit Vr vorgeschlagen, das auf den Rohrstrang einwirkende Temperaturprofil entlang des Verformungsbereichs so anzupassen, dass der Unterschied der Verformungsgeschwindigkeit in radialer Richtung zwischen Anfang und Ende möglichst gering ist; und im Idealfall durch das Temperaturprofil ein Anstieg vollständig kompensiert wird.

Im Hinblick darauf hat es sich als vorteilhaft erwiesen, wenn in der Heizzone ein Temperaturprofil erzeugt wird, das entlang mindestens einer Teillänge der Verformungszone einen umgekehrten Verlauf zu einem Profil der Tangentialspannung entlang der entsprechenden Teillänge der Verformungszone aufweist.

Bei der Teillänge handelt es sich im einfachsten Fall um die gesamte Länge der Verformungszone; es genügt aber auch, den besonders kritischen Bereich um die Mitte der Verformungszone zu betrachten. Unterschiede im Profil der Tangentialspannung entlang dieser Teillänge werden dabei ganz oder mindestens teilweise durch das Temperaturprofil kompensiert, mit dem Ziel, entlang der Teillänge eine möglichst konstante radiale Dehngeschwindigkeit einzustellen.

Die Berechnung eines den Verlauf der Tangentialspannung vollständig kompensierenden "umgekehrten" Temperaturverlaufs erfolgt anhand der obigen Gleichungen (1) bis (3).

Die radiale Dehngeschwindigkeit Vr ist proportional zum Verhältnis Tangentialspannung/Viskosität, also:
$d\varepsilon/dt = \sigma/\eta = 2 \cdot \pi \cdot V_r$
Für die Tangentialspannung gilt: $\sigma_T = (p \cdot r)/WD + \rho \omega^2 r^2$

Die Viskosität und deren Temperaturabhängigkeit sind glasspezifisch. Für die Viskosität $\eta$ von Quarzglas ergibt sich folgende Abhängigkeit $\eta(T)$:
lg $\eta$ =1,6+8487/(T[°C]-390) (in Pas)

Damit ergibt sich unter der Bedingung einer konstanten Dehngeschwindigkeit Vr folgendes für das "umgekehrte" Temperaturprofil:

$$T = \frac{8487}{\lg\left(\frac{\frac{p \cdot r}{WD} + \rho\omega^2 r^2}{2 \cdot \pi \cdot V_r}\right) - 1,6} + 390 \qquad (4)$$

In der Praxis ist eine vollständige Kompensation unterschiedlicher radialer Dehngeschwindigkeiten meist nicht erforderlich. In einfacheren Fällen genügt es, wenn bei einem Profil, bei dem die Tangentialspannung in Richtung Rohr zunimmt, die Temperatur in derselben Richtung abnimmt. Oder bei einem Profil, bei dem die Tangentialspannungen bei einer axialen Position entlang der Verformungszone ein Maximum aufweist, das Temperaturprofil an dieser axialen Position ein Minimum aufweist.

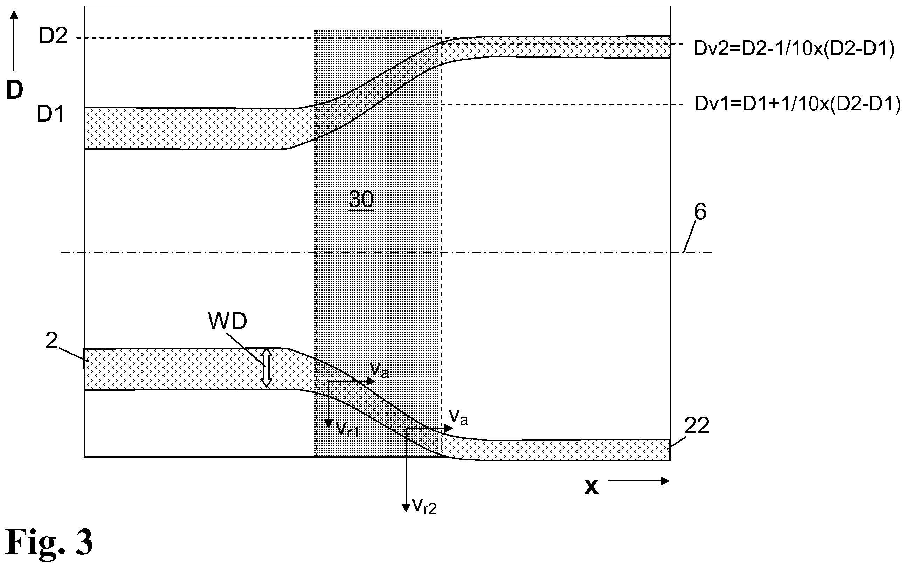

Infolge einer abnehmenden Wanddicke wäre bei homogenem Temperaturverlauf entlang der Verformungszone an deren Ende eine besonders hohe radiale Dehngeschwindigkeit zu erwarten. Die Skizze von **Figur 3** zeigt den Bereich der Verformungszone 30 zwischen Hohlzylinder 2 und Rohr 22 schematisch in einem Diagramm. Auf der Ordinate ist dabei der Durchmesser D aufgetragen und auf der Abszisse die Längsachsenposition x. Zwecks Erläuterung des Effekts unerwünschter großer Unterschiede in den radialen Dehngeschwindigkeiten hat der um die Längsachse 6 rotierende Hohlzylinder 2 hierbei eine größere Wandstärke als das abgezogene Rohr 22, so dass sich entlang der Verformungszone 30 eine Verringerung der Wandstärke ergibt. Die Verformungszone 30 ist mit einer Grauschattierung unterlegt.

Als "Anfang" der Verformungszone 30 wird diejenige x-Position definiert, an der für den ortsabhängigen Außendurchmesser $D_V$ der Verformungszone gilt: $D_{v1}=D1+1/10x(D2-D1)$. Dementsprechend markiert das "Ende" der Verformungszone diejenige x-Position, an der für den ortsabhängigen Außendurchmesser $D_V$ der Verformungszone gilt: $D_{v2}=D_2-1/10 x(D2-D1)$.

Im vorderen Bereich der Verformungszone 30, bei vergleichsweise großer Wandungsdicke WD, ergibt sich anhand der obigen Gleichungen (1) bis (3) eine radiale Dehngeschwindigkeit, die vom Vektor $v_{r1}$ repräsentiert wird. Im Vergleich dazu, stellt sich im hinteren Bereich der Verformungszone 30, bei dünnerer Wandungsdicke WD - bei gleicher Vorschubgeschwindigkeit $v_a$ - eine vergleichsweise höhere radiale Dehngeschwindigkeit ein, wie dies der längere Vektor $v_{r2}$ anzeigt.

Um dem entgegen zu wirken, ist die Temperatur gegen Ende der Verformungszone geringer ist als am Anfang der Verformungszone. Der Temperaturunterschied zwischen Ende und Anfang der Verformungszone beträgt dabei mindestens 20 °C.

Zur Erzeugung eines nicht-homogenen Temperaturprofils entlang der Verformungszone, wird die Heizzone in zwei oder mehr Heizbereiche unterteilt, die unabhängig voneinander beheizbar sind. Erfindungsgemäß ist vorgesehen, dass die Heizzone eine dem Anfang der Verformungszone zugeordneten vorderen Heizbereich und einen dem Ende der Verformungszone zugeordneten hinteren Heizbereich aufweist, wobei mittels des vorderen Heizbereichs eine höhere Temperatur auf der Oberfläche der Verformungszone erzeugt wird als mittels des hinteren Heizbereichs.

Im idealen Fall ist die radiale Dehngeschwindigkeit zwischen Anfang (Dv1) und Ende (Dv2) des Verformungsbereichs konstant. In der Praxis hat es sich bewährt, wenn sich die radialen Dehngeschwindigkeiten an diesen Positionen um höchstens 50% unterscheiden (bezogen auf den kleineren der beiden Werte.

Ein weiterer Parameter zur Beeinflussung der lokalen, radialen Dehngeschwindigkeit ist die Wanddicke des abgezogenen Glasstrangs. Je dicker die Rohrwandung ist, umso größer ist bei gleicher Viskosität der Verformungswiderstand gegen radiale Dehnung. Die radiale Dehngeschwindigkeit ist umgekehrt proportional zur Wanddicke. Diese wird bestimmt durch das Verhältnis der Geschwindigkeit, mit der der Hohlzylinder in die Heizzone gelangt und der Geschwindigkeit, mit der das Rohr aus der Heizzone entfernt wird. Ist dieses Geschwindigkeitsverhältnis kleiner als 1, wird das Quarzglasrohr nicht elongiert, sondern es kommt zu einer Aufstauchung. Diese führt überwiegend an weichen und dünnen Wandbereichen zur Verdickung, also an Wandbereichen mit hoher radialer Dehngeschwindigkeit. Im Idealfall wird die Wanddicke über den Verformungsbereich annähernd konstant gehalten und dadurch der Umformprozess stabilisiert und eine maßgenaue Einstellung des Außendurchmessers ermöglicht.

Daher ist bei einer bevorzugten Verfahrensvariante vorgesehen, dass der Umformprozess mindestens zeitweilig eine Stauchphase umfasst, während der das Verhältnis einer Geschwindigkeit, mit der der Hohlzylinder in die Heizzone gelangt und einer Geschwindigkeit, mit der das Rohr aus der Heizzone entfernt wird, kleiner als 1 ist.

An den umzuformenden Hohlzylinder werden dabei stirnseitig Halter geschweißt und diese in Spannfutter einer Glasdrehbank eingespannt und synchron rotiert. Eine Heizquelle wird zonenweise entlang des Hohlzylinders bewegt. In dessen Innenbohrung kann ein definierter Innendruck eingestellt werden. Infolge der Rotation und getrieben durch die Zentrifugalkraft und den Innendruck erweitert sich die Innenbohrung, ohne dass hierzu die Spannfutter auseinanderbewegt werden müssen. Der Glas-Hohlzylinder kann beim Umformprozess auch in Richtung der Rotationsachse gestaucht werden, wobei die Rohr-Wanddicke nach dem Stauchen zwischen 70 % und maximal 100 % der Wanddicke vor dem Stauchen beträgt. Ziel ist dabei eine Durchmesser-Vergrößerung des Glasrohres bei weitgehender Beibehaltung seiner Wanddicke. Ein Stauchprozess, der zu einer Vergrößerung der Wanddicke führt (> 100 %) ist zwar auch möglich, führt allerdings zu unerwünschten Verformungen.

Der Gasverbrauch zur Erzeugung des Blasdrucks ist von der Höhe des Blasdrucks abhängig. Bei hohem Blasdruck ist er geringer als bei niedrigem Blasdruck. Von daher ist ein hoher Blasdruck erwünscht. Bei hohen Anforderungen an Maßgenauigkeit und Prozessstabilität wird jedoch eine Verfahrensweise bevorzugt, bei der der Blasdruck auf weniger als 20 mbar, vorzugsweise auf weniger als 10 mbar eingestellt wird.

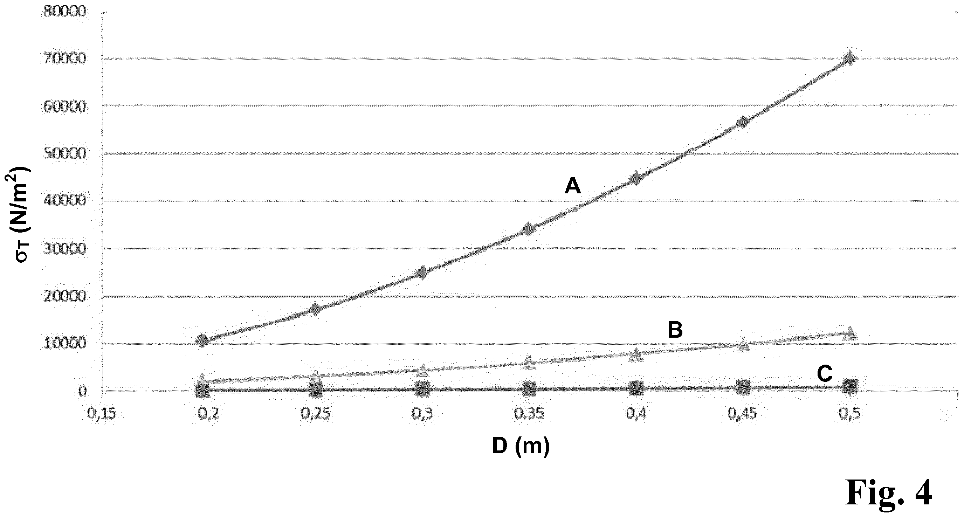

Denn es hat sich gezeigt, dass ein hoher Blasdruck die Prozessstabilität beeinträchtigen kann. Die in der Rohrwandung wirkende Tangentialspannung $\sigma T$ ist anhand obiger Gleichung (1) mathematisch beschrieben. Der die Wirkung des Blasdrucks beschreibende, erste Term dieser Gleichung ist abhängig von der Wanddicke WD des Quarzglasrohres. Je dünner die Wandung ist, umso stärker fällt dieser Term ins Gewicht. Dies zeigt das Diagramm **Figur 4.** Auf der Ordinate ist die Tangentialspannung $\sigma_T$ (N/m$^2$) gegen den Außendurchmesser D (m) eines herzustellenden Rohres aus Quarzglas aufgetragen. Es wird ausgegangen von einem Ausgangsrohr mit einem Außendurchmesser von 197 mm und mit einer Wanddicke von 7,5 mm. Die Kurve A zeigt die Zunahme der Tangentialspannung mit dem Enddurchmesser des Rohres, wenn maßgeblich der Blasdruck zur Rohrerweiterung eingesetzt wird, wenn also die Rotationsgeschwindigkeit gegen null geht. Die Kurve B zeigt die Zunahme der Tangentialspannung mit dem End-Rohrdurchmesser, wenn die Durchmessererweiterung ausschließlich aufgrund der Zentrifugalkraft erfolgt, und zwar bei einer Umdrehungsgeschwindigkeit von 90 U/min. Im Vergleich dazu zeigt die Kurve C ebenfalls eine Durchmessererweiterung lediglich aufgrund der Zentrifugalkraft, jedoch bei einer geringeren Rotationsgeschwindigkeit von 25 U/min.

Daraus ist ersichtlich, dass die in der Wandung des Quarzglasrohres wirkende Tangentialspannung beim Umformprozess stark vom Blasdruck abhängt. Dies führt dazu, dass im Ausgangszylinder vorhandene Wanddickenabweichungen beim Verformungsprozess unter Einfluss von Blasdruck verstärkt werden, da dabei eine dünnere Wandung einer höheren Tangentialspannung unterliegt als eine dickere Wandung. Dieser Verstärkungseffekt fällt im Vergleich dazu bei einem Umformprozess mit reiner Zentrifugalkraft geringer aus, da hierbei die Wanddicke keinen Einfluss auf die Zunahme der Tangentialspannung hat, sondern lediglich die höhere Umdrehungsgeschwindigkeit, wie dies der Vergleich der Kurve B mit Kurve C zeigt.

Mittels der bisher bekannten Umformverfahren waren beim Umformen von Quarzglas-Hohlzylindern Durchmesseränderungen ($D_2$-$D_1$) von mehr als 40 mm ohne Inkaufnahme von Umformfehlern nicht möglich. Derartige Durchmesseränderungen sind mittels des erfindungsgemäßen Verfahrens problemlos zu bewältigen, sogar bei Durchmesseränderungen von 120 mm in einer einzigen Umformstufe zeigten sich keinerlei Inhomogenitäten im abgezogenen Rohrstrang oder Instabilitäten im Prozessverlauf. Demnach sind beim erfindungsgemäßen Verfahren große Durchmesseränderungen von 70 mm und mehr und sogar von 100 mm und mehr in einer einzigen Umformstufe bevorzugt.

Ausführungsbeispiel

Nachfolgend wird die Erfindung anhand eines Ausführungsbeispiels und einer Patentzeichnung näher erläutert. In der Zeichnung zeigt im Einzelnen:

**Figur 1**  eine Ausführungsform einer Vorrichtung zur Umformen eines Hohlzylinders aus Quarzglas in eine Quarzglasrohr in einer Seitenansicht und in schematischer Darstellung,

**Figur 2**  einen Ausschnitt der Vorrichtung von Figur 1 mit zusätzlichen konstruktiven Details in schematischer Darstellung,

**Figur 3**  eine Skizze zur Erläuterung von Parametern des Umformprozesses,

**Figur 4**  ein Diagramm zur Erläuterung des Einflusses von Blasdruck und Zentrifugalkraft auf Tangentialkräfte in der Wandung eines Rohres während des Umformprozesses, und

**Figur 5**  ein Diagramm zur Erläuterung der Abhängigkeit der geometrischen Gestalt der Verformungszone von der eingebrachten Leistungsdichte.

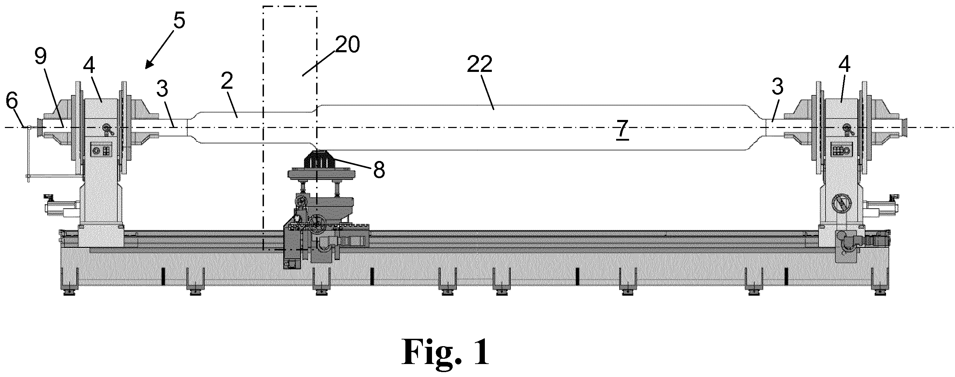

**Figur** 1 zeigt schematisch eine Vorrichtung zum Umformen eines Quarzglas-Hohlzylinders 2 zu einem Großrohr 22. Der Umformungsprozess umfasst mehrere Umformstufen, in denen der jeweilige Ausgangs-Hohlzylinder sukzessive zu dem gewünschten Großrohr 22 mit einem Außendurchmesser von 960 mm und einer Wanddicke von 7,5 mm umgeformt wird.

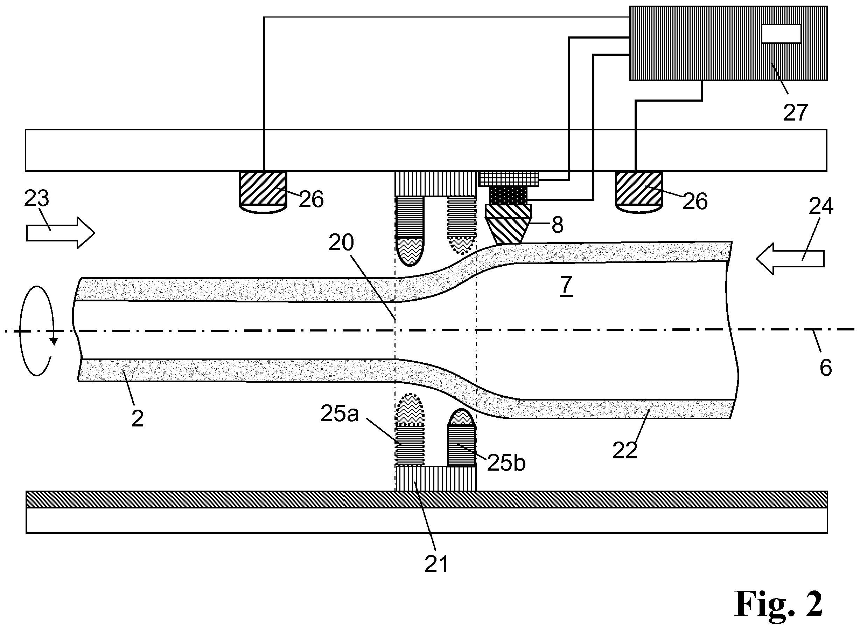

An die Stirnseiten des umzuformenden Hohlzylinders 2 aus Quarzglas werden Halterohre 3 angeschweißt. Die Halterohre 3 sind in Spannfutter 4 einer horizontalen Glasdrehbank 5 eingespannt, die synchron um die Rotationsachse 6 rotieren. Ein Brennerwagen 21 (siehe Figur 2), auf dem mehrere Brenner ringförmig um den Außenumfang des Hohlzylinders 2 verteilt sind, wird von einem Hohlzylinder-Ende zum anderen bewegt und erhitzt dabei den Quarzglas-Hohlzylinder 2 zonenweise und über seinen gesamten Umfang. Der Brennerwagen 21 ist in Figur 1 durch eine strichpunktierte Umfangslinie 20 - die Heizzone andeutend - symbolisiert; in Figur 2 ist er im Detail schematisch dargestellt. Durch einen Gaseinlass 9 kann dabei die Innenbohrung 7 von Hohlzylinder 2 und Großrohr 22 mit Gas gespült werden, und es kann ein definierter Innendruck eingestellt werden. Getrieben durch die Zentrifugalkraft und den Innendruck legt sich die Rohr-Außenwand gegen ein Formteil aus Grafit 8 an, das zusammen mit dem Brennerwagen 21 verfahren wird.

Aus der Detail-Darstellung von **Figur 2** ist der Brennerwagen 21 erkennbar, der den Ausgangs-Hohlzylinder 2 von links nach rechts abfährt, wie vom Richtungspfeil 23 angezeigt. Auf dem Brennerwagen 21 sind nacheinander zwei parallel um die Rotationsachse 6 umlaufende Brennerringe 25a, 25b montiert, die zur Erwärmung und Erweichung des Ausgangszylinders 2 dienen. Die beiden Brennerringe 25a, 25b sind in axialer Richtung (6) um 50 mm beabstandet und unabhängig voneinander in ihrer Heizleistung anstellbar. Jeder der Brennerringe 25a, 25b wird aus fünf Gasbrennern gebildet, die gleichmäßig um die Zylinder-Längsachse 6 verteilt, wobei in Umfangsrichtung gesehen die Einzelbrenner der Brennerreihen 25a, 25b versetzt zueinander angeordnet sind.

**Beispiel**

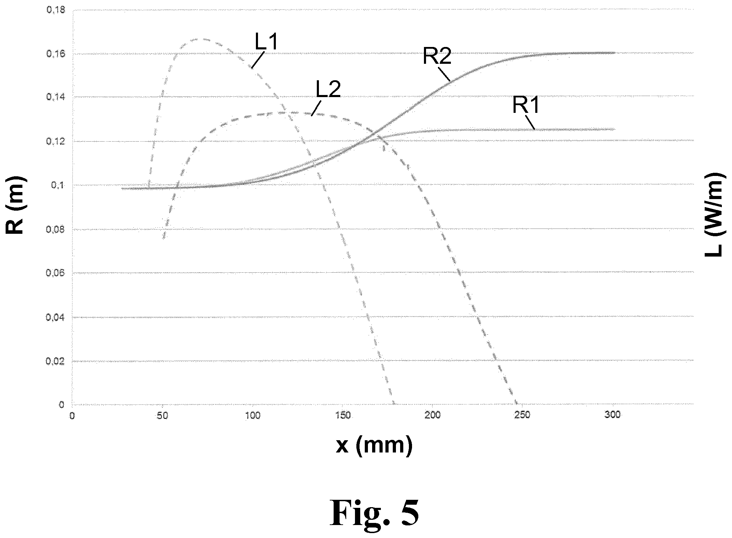

Durch Vorschub des Brennerwagens 21 mit einer Geschwindigkeit von 4 cm/min wird der Hohlzylinder 2 unter Rotation um seine Längsachse 6 (die der Rotationsachse entspricht) mit einer Geschwindigkeit von 60 U/min kontinuierlich unter Einwirkung der Brennerringe 25a, 25b auf hohe Temperatur um 2.100 °C erhitzt. Dabei wird im hinteren Brennerring 25b eine geringere Heizleistung als im vorderen Brennerring 25a erzeugt, so dass sich insgesamt eine Heizleistungsdichte ergibt, die weiter unten anhand **Figur 5** noch näher erläutert wird. Zur Erzielung einer möglichst konstanten radialen Dehngeschwindigkeit entlang der Verformungszone ist dabei das axiale Profil der Heizleistungskurve (nicht so sehr der absolute Wert) entscheidend.

Dabei kann die Innenbohrung 7 mit einem Gas gespült werden und ein definierter und geregelter Innendruck bis etwa 100 mbar in der Innenbohrung 7 eingestellt werden. Im Ausführungsbeispiel wird ein Blasdruck von 15 mbar angelegt.

Das Quarzglas erhält durch das Aufheizen in den Brennerringen 25a, 25b eine so geringe Viskosität, so dass es sich allein unter Einwirkung von Zentrifugalkraft und Innendruck und ohne Einsatz eines Formwerkzeugs zu dem Rohr 22 verformt. Der Umformprozess ist somit werkzeugfrei. Unterstützend legt sich die Rohr-Außenwandung gegen ein Formteil 8 aus Grafit an.

Zur Wanddickenmessung sind im Bereich des Ausgangszylinders 2 und im Bereich des abgezogenen Quarzglasrohres 22 Kameras 26 angeordnet. Die Kameras 26 sind mit einem Rechner 27 verbunden, der eine Wanddickenregelung beinhaltet. Die Kameras 26 sind in der Lage, bei rotierendem Rohrstrang kontinuierlich ein Wanddickenprofil zu erzeugen, das im Rechner 27 in der Art ausgewertet wird, dass der Betrag der Wandeinseitigkeit (Maximalwert minus Minimalwert der Wanddicke) und die zirkumferentielle Lage der minimalen Wanddicke und der maximalen Wanddicke über dem Außenumfang festgestellt wird.

Beim Umformprozess findet ein zusätzliches Elongieren nicht zwangsläufig statt. Häufig wird der Ausgangszylinder sogar gestaucht derart, so dass das aufgeblasene Quarzglasrohr 22 etwa dieselbe Wanddicke hat wie der Hohlzylinder 2. Im vorliegenden Ausführungsbeispiel wird um 15% aufgestaucht, das heißt die Querschnittsfläche des Rohres 22 ist 15% größer als die Querschnittsfläche des Hohlzylinders 2.

Die radiale Dehngeschwindigkeit wird anhand der obigen Gleichungen (1) bis (3) ermittelt; sie wird so eingestellt, dass sie selbst im Maximum kleiner als 8 cm/min ist. Für die Dichte von Quarzglas wird dabei der Wert 2200 kg/m$^3$ eingesetzt, und für die Viskosität $\eta$ von Quarzglas gilt dabei:

$$\lg \eta = 1{,}6 + \frac{8487}{T[°C] - 390} Pas$$

Das so erhaltene Quarzglasrohr 22 kann als Ausgangs-Hohlzylinder für einen weiteren Umformprozess dienen. Auf diese Weise wird der ursprüngliche Hohlzylinder 2 stufenweise zu einem Quarzglas-Großrohr aufgeweitet, wobei jede Umformstufe eine Durchmesser-Aufweitung von 120 mm ausmacht. Der Außendurchmesser der Brennerringe 25a, 25b und der Arbeitsabstand des Formwerkzeugs 8 werden dabei an den jeweiligen Außendurchmesser der Umformstufe angepasst.

Anhand dieses Verfahrens wird auf wirtschaftliche Weise ein Großrohr aus synthetischem Quarzglas oder aus Quarzglas aus natürlich vorkommendem Rohstoff mit insgesamt hoher Maßhaltigkeit erhalten. Die Wanddickenschwankung des so erzeugten Quarzglas-Großrohes beträgt weniger als 1 mm pro Rohrlängenmeter.

Das Diagramm von **Figur 4** dient zur Erläuterung des Einflusses des Blasdrucks auf Wanddickenschwankungen. Auf der Ordinate ist die Tangentialspannung $\sigma_T$ (N/m$^2$) gegen den Außendurchmesser D (m) des herzustellenden Quarzglasrohres aufgetragen. Es wird ausgegangen von einem Ausgangsrohr mit einem Außendurchmesser von 197 mm und mit einer Wanddicke von 7,5 mm. Die Kurve A zeigt die Zunahme der Tangentialspannung mit dem Enddurchmesser des Rohres, wenn maßgeblich der Blasdruck zur Rohrerweiterung eingesetzt wird, wenn also die Rotationsgeschwindigkeit gegen null geht. Die Kurve B zeigt die Zunahme der Tangentialspannung mit dem End-Rohrdurchmesser, wenn die Durchmessererweiterung ausschließlich aufgrund der Zentrifugalkraft erfolgt, und zwar bei einer Umdrehungsgeschwindigkeit von 90 U/min. Im Vergleich dazu zeigt die Kurve C ebenfalls eine Durchmessererweiterung lediglich aufgrund der Zentrifugalkraft, jedoch bei einer geringeren Rotationsgeschwindigkeit von 25 U/min.

Daraus ist ersichtlich, dass die in der Wandung des Quarzglasrohres wirkende Tangentialspannung beim Umformprozess stark vom Blasdruck abhängt. Dies führt dazu, dass im Ausgangszylinder vorhandene Wanddickenabweichungen beim Verformungsprozess unter Einfluss von Blasdruck verstärkt werden, da dabei eine dünnere Wandung einer höheren Tangentialspannung unterliegt als eine dickere Wandung. Dieser Verstärkungseffekt fällt im Vergleich dazu bei einem Umformprozess mit reiner Zentrifugalkraft geringer aus, da hierbei die Wanddicke keinen Einfluss auf die Zunahme der Tangentialspannung hat, sondern lediglich die höhere Umdrehungsgeschwindigkeit, wie dies der Vergleich der Kurve B mit Kurve C zeigt.

**Figur** 5 zeigt ein Diagramm zur Erläuterung des Einflusses der Temperatur im Bereich der Verformungszone auf deren geometrische Ausgestaltung. Auf der linken Ordinate ist der Radius R in [m] der "Schulter" gegen die Längsachsenposition x in [mm] aufgetragen, und auf der rechten Ordinate die Leistungsdichte L in [W/m].

Das Diagramm zeigt zwei Kurvenpaare im Vergleich. Beim Kurvenpaar L1/R1 wurde der Radiusverlauf R1 der Schulter aufgrund einer bisher üblichen Verteilung der Leistungsdichte L1 ermittelt. Das Kurvenpaar L2/R2 zeigt den Effekt einer Anpassung der Verteilung der Leistungsdichte L2 gemäß der Erfindung auf den Radiusverlauf R2 der Schulter.

Dabei ist zu beachten, dass das Profil des Leistungseintrages nicht identisch mit dem Temperaturprofil ist, da die Wärme im Glas weiter transportiert wird und sich somit quasi aufaddiert. Deshalb endet der Leistungseintrag immer etwa am Wendepunkt der Schulter, also an deren steilster Stelle. Das dargestellte Leistungsprofil L2 ergibt sich, wenn das dazugehörige Temperaturprofil so angepasst ist, dass die radiale Verformungsgeschwindigkeit innerhalb der Verformungszone annähernd konstant ist. Diese Anpassung führt zu einer breiteren Verteilung der Leistungsdichte.

Die Anpassung beim Kurvenpaar L2/R2 bezieht sich auf die axiale Temperaturverteilung und sie zielt auf darauf ab, die sich entlang der Verformungszone (30) ändernde Tangentialspannung so zu kompensieren, dass sich entlang der gesamten Verformungszone (30) eine möglichst konstante radiale Dehngeschwindigkeit einstellt, die jedenfalls den oben genannten Maximalwert von 8 cm/min nicht übersteigt.

Die Berechnung des entsprechenden axialen Temperaturprofils erfolgt anhand der oben angegebenen Gleichung (4). Damit ist gewährleistet, dass das Temperaturprofil bei einer axialen Position entlang der Verformungszone ein Minimum aufweist, bei der das Profil der Tangentialspannung ein Maximum hat.

Darüber hinaus zeigt sich, dass die vergleichsweise breitere Verteilung der Leistungsdichte L2 trotz deutlich geringerem Maximalwert (etwa 230.000 W/m gegenüber etwa 260.00 W/m bei L1) einen wesentlichen höheren Endradius bei R2 (etwa 0,160 m gegenüber etwa 0,125 m bei R1) bewirkt. Es ist auch erkennbar, dass die Steigung innerhalb der Schulterkontur von R2 über eine lange Strecke etwa konstant ist, und dass sich trotz des größeren Endradius die maximale Steigung kaum gegenüber der von R1 unterscheidet. Die konstante Steigung der Schulter ist ein Hinweis auf einen stabilen Umformprozess.

**Patentansprüche**

1. Verfahren zur Herstellung eines Rohres (22) aus Glas durch Umformen eines Hohlzylinders (2) aus dem Glas mit einem Außendurchmesser $D_1$, indem dieser um eine Rotationsachse (6) rotierend bereichsweise in einer mit einer relativen Vorschubgeschwindigkeit Va bewegten Heizzone (20) erweicht, und der erweichte Bereich unter der Wirkung einer Zentrifugalkraft und/oder eines in der Hohlzylinderbohrung (7) anliegenden Innenüberdrucks unter Bildung einer Verformungszone (30) radial gedehnt und kontinuierlich das Rohr (22) mit einem Außendurchmesser $D_2$, der größer ist als $D_1$, geformt wird, **dadurch gekennzeichnet, dass** das radiale Dehnen des erweichten Bereichs mit einer ortsabhängigen, radialen Dehngeschwindigkeit Vr erfolgt, deren Profil entlang der Verformungszone (30) einen Maximalwert Vr,max aufweist, der kleiner als das 2-fache der Vorschubgeschwindigkeit Va ist, und wobei die Temperatur am Ende der Verformungszone (30) geringer ist als am Anfang der Verformungszone (30), indem die Heizzone (20) einen dem Anfang der Verformungszone (30) zugeordneten vorderen Heizbereich und einen dem Ende der Verformungszone (30) zugeordneten hinteren Heizbereich aufweist, wobei mittels des vorderen Heizbereichs eine höhere Temperatur auf der Oberfläche der Verformungszone (30) erzeugt wird als mittels des hinteren Heizbereichs, wobei die Verformungszone (30) einen ortsabhängigen Außendurchmesser $D_V$ aufweist, und wobei für den Außendurchmesser $D_{V1}$ am Anfang der Verformungszone (30) gilt: $D_{v1}=D_1+1/10x(D_2-D_1)$, und für den Außendurchmesser $D_{V2}$ am Ende der Verformungszone (30): $D_{v2}=D_2-1/10 x(D_2-D_1)$.

2. Verfahren nach Anspruch 1, **dadurch gekennzeichnet, dass** der Maximalwert Vr,max der radialen Dehngeschwindigkeit kleiner als das 1,5-fache, bevorzugt kleiner als das 1-fache und besonders bevorzugt kleiner als das 0,7-fache der Vorschubgeschwindigkeit Va ist.

3. Verfahren nach Anspruch 1 oder 2, **dadurch gekennzeichnet, dass** in der Heizzone (21) ein Temperaturprofil erzeugt wird, das entlang mindestens einer Teillänge der Verformungszone (30) einen umgekehrten Verlauf zum Dehngeschwindigkeits-Profil aufweist.

4. Verfahren nach einem der vorhergehenden Ansprüche, **dadurch gekennzeichnet, dass** der Umformprozess mindestens eine Stauchphase umfasst, während der das Verhältnis einer Geschwindigkeit, mit der der Hohlzylinder (2) in die Heizzone gelangt und einer Geschwindigkeit, mit der das Rohr (22) aus der Heizzone entfernt wird, kleiner als 1 ist.

**5.** Verfahren nach einem der vorhergehenden Ansprüche, **dadurch gekennzeichnet, dass** die maximale radiale Dehngeschwindigkeit Vr,max kleiner als 20 cm/min, bevorzugt kleiner als 10 cm/min ist.

**6.** Verfahren nach einem der vorhergehenden Ansprüche, **dadurch gekennzeichnet, dass** der Blasdruck auf weniger als 20 mbar, vorzugsweise auf weniger als 10 mbar eingestellt wird.

**7.** Verfahren nach einem der vorhergehenden Ansprüche, **dadurch gekennzeichnet, dass** das Rohr (22) mit einem Außendurchmesser $D_2$ erzeugt wird, der um mindestens 40 mm, vorzugsweise um mindestens 70 mm und besonders bevorzugt um mindestens 100 mm größer ist als $D_1$.

**Claims**

**1.** A method for producing a tube (22) of glass by forming a hollow cylinder (2) from the glass with an outer diameter $D_1$ in that said cylinder, while rotating about a rotation axis (6), is softened in portions in a heating zone (20) which is moved at a relative feed rate Va, and the softened portion is radially expanded under the action of a centrifugal force and/or of an internal overpressure applied in the hollow cylinder bore (7) so as to form a deformation zone (30), and the tube (22) is continuously shaped with an outer diameter $D_2$ which is greater than $D_1$, **characterized in that** the radial expansion of the softened portion is carried out at a location-dependent radial expansion rate Vr, the profile of which along the deformation zone has a maximum value Vr,max which is smaller than 2 times the feed rate Va, and that the temperature at the end of the deformation zone (30) is lower than at the beginning of the deformation zone (30) **in that** the heating zone (20) has a front heating portion assigned to the beginning of the deformation zone (30) and a rear heating portion assigned to the end of the deformation zone (30), wherein a higher temperature is produced by means of the front heating portion on the surface of the deformation zone (30) than by means of the rear heating portion, wherein the deformation zone (30) has a location-dependent outer diameter $D_V$, and wherein the following applies to the outer diameter $D_{V1}$ at the beginning of the deformation zone (30): $D_{V1}=D_1+1/10x(D_2-D_1)$, and to the outer diameter $D_{V2}$ at the end of the deformation zone (30): $D_{V2}=D_2-1/10 x(D_2-D_1)$.

**2.** The method according to claim 1, **characterized in that** the maximum value Vr,max of the radial expansion rate is smaller than 1.5 times, preferably smaller than 1 time, and particularly preferably smaller than 0.7 time, the feed rate Va.

**3.** The method according to claim 1 or 2, **characterized in that** in the heating zone (20) a temperature profile is generated that along at least a sub-length of the deformation zone (30) has a course opposite to a profile of the tangential tension along the same sub-length.

**4.** The method according to any one of the preceding claims, **characterized in that** the forming process includes at least one compression phase during which the ratio of a speed at which the hollow cylinder (2) moves into the heating zone (20) and of a speed at which the tube (22) is removed from the heating zone (20) is smaller than 1.

**5.** The method according to any one of the preceding claims, **characterized in that** the maximum radial expansion rate Vr,max is smaller than 20 cm/min, preferably smaller than 10 cm/min.

**6.** The method according to any one of the preceding claims, **characterized in that** the blow pressure is set to less than 20 mbar, preferably to less than 10 mbar.

**7.** The method according to any one of the preceding claims, **characterized in that** the tube (22) is produced with an outer diameter $D_2$ which is by at least 40 mm, preferably by at least 70 mm, and particularly preferably by at least 100 mm, greater than $D_1$.

**Revendications**

**1.** Procédé de fabrication d'un tube (22) en verre par le remodelage d'un cylindre creux (2) à partir de verre d'un diamètre extérieur $D_1$, dans lequel ledit cylindre est ramolli par sections en tournant autour d'un axe de rotation (6) dans une zone chauffante (20) déplacée à une vitesse d'avance relative Va, et ladite zone ramollie, sous l'action d'une force centrifuge et/ou d'une surpression intérieure régnant dans l'alésage du cylindre creux (7), est étirée radialement, en formant une zone de déformation (30), et ledit tube (22) est continuellement modelé avec un diamètre

extérieur $D_2$ qui est supérieur à $D_1$, **caractérisé en ce que** l'étirement radial de la section ramollie se fait à une vitesse d'étirement radiale et dépendante du lieu Vr, dont le profil le long de la zone de déformation (30) présente une valeur maximum Vr,max qui est inférieure au double de la vitesse d'avance Va, et dans lequel la température à l'extrémité de la zone de déformation (30) est plus faible qu'au début de la zone de déformation (30), car la zone chauffante (20) comprend une section chauffante avant assignée au début de la zone de déformation (30) et une section chauffante arrière assignée à l'extrémité de la zone de déformation (30), une chaleur plus importante étant générée sur la surface de la zone de déformation (30) au moyen de la section chauffante avant qu'au moyen de la section chauffante arrière, la zone de déformation (30) présentant un diamètre extérieur dépendant du lieu $D_V$, la règle ci-après s'applique pour le diamètre extérieur $D_{V1}$ au début de la zone de déformation (30) étant: $D_{V1}=D_1+1/10x(D_2-D_1)$, et pour le diamètre extérieur $D_{V2}$ à l'extrémité de la zone de déformation (30): $D_{V2}=D_2-1/10x(D_2-D_1)$.

2.  Procédé selon la revendication 1, **caractérisé en ce que** la valeur maximum Vr,max de la vitesse d'étirement radiale est inférieure à 1,5 fois, de préférence inférieure à 1 fois et en particulier de préférence inférieure à 0,7 fois la vitesse d'avance Va.

3.  Procédé selon la revendication 1 ou 2, **caractérisé en ce que** dans la zone chauffante (21), un profil de température est généré qui présente le long d'au moins une partie de la longueur de la zone de déformation (30) une courbe inverse par rapport au profil de la vitesse d'étirement.

4.  Procédé selon l'une quelconque des revendications précédentes, **caractérisé en ce que** le processus de modelage comprend au moins une phase de compression, durant laquelle le rapport entre une vitesse avec laquelle le cylindre creux (2) arrive dans la zone chauffante et une vitesse avec laquelle le tube (22) est retiré de la zone chauffante, est inférieur à 1.

5.  Procédé selon l'une quelconque des revendications précédentes, **caractérisé en ce que** la vitesse d'étirement radiale maximum Vr,max est inférieure à 20 cm/min, de préférence inférieure à 10 cm/min.

6.  Procédé selon l'une quelconque des revendications précédentes, **caractérisé en ce que** la pression de soufflage est réglée sur moins de 20 mbar, de préférence sur moins de 10 mbar.

7.  Procédé selon l'une quelconque des revendications précédentes, **caractérisé en ce que** le tube (22) est produit avec un diamètre extérieur $D_2$, qui est supérieur d'au moins 40 mm, de préférence d'au moins 70 mm et en particulier de préférence d'au moins 100 mm à $D_1$.

Fig. 1

**Fig. 2**

EP 3 034 477 B1

**Fig. 3**

EP 3 034 477 B1

Fig. 4

EP 3 034 477 B1

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2004149325 A
- CN 102887626 A